# EUROPEAN PATENT APPLICATION

(11) **EP 4 451 425 A1**
(43) Date of publication of application: **23.10.2024**
(21) Application number: 23787656.0
(22) Date of filing: 10.04.2023
(51) Int. Cl.: H01M 10/613

(54) **BATTERY AND ELECTRICAL DEVICE**

(30) Priority: 14.04.2022 CN 202220863807 U
(71) Applicant: Contemporary Amperex Technology Co., Limited, Ningde, Fujian 352100 (CN)
(72) Inventor: CHEN, Guize, Ningde, Fujian 352100 (CN); WANG, Yongguang, Ningde, Fujian 352100 (CN); LI, Junting, Ningde, Fujian 352100 (CN); CHEN, Zonghui, Ningde, Fujian 352100 (CN); YU, Kaiqin, Ningde, Fujian 352100 (CN); SU, Yongqiang, Ningde, Fujian 352100 (CN)
(74) Representative: Jacob, Reuben Ellis
(86) International application number: PCT/CN2023/087408
(87) International publication number: WO 2023/198012

(57) **Abstract**

The present application relates to a battery and an electric device. The battery comprises: at least two battery cells arranged in a preset direction; and at least one separator provided between every two adjacent battery cells in the preset direction and used for separating two adjacent battery cells, wherein a first cooling channel is formed between the separator and at least one battery cell adj acent to the separator, the separator comprises a first surface and a second surface which are adjacently arranged, an inlet of the first cooling channel is located on the first surface, and an outlet of the first cooling channel is located on the second surface. The battery has higher safety.

## Description

### CROSS-REFERENCE TO RELATED APPLICATIONS

This application claims priority to Chinese Patent Application No. 202220863807.8, filed on April 14, 2022 and entitled "BATTERY AND ELECTRIC DEVICE", which is incorporated herein by reference in its entirety.

### TECHNICAL FIELD

This application relates to the field of battery technologies, and specifically, to a battery and an electric device.

### BACKGROUND

Saving energy and reducing emissions is crucial to the sustainable development of the automobile industry. Electric vehicles, with their advantages in energy conservation and emission reduction, have become an important part of sustainable development of the automobile industry. For electric vehicles, battery technology is an important factor in connection with their development.

In the development of battery technology, how to improve the safety of batteries is an urgent technical problem that needs to be solved in the battery technology.

### SUMMARY

This application is intended to provide a battery and an electric device. The battery has high safety.

This application is implemented by the following technical solutions.

According to a first aspect, this application provides a battery. The battery includes: at least two battery cells arranged along a preset direction; and at least one separation member disposed between adjacent two of the battery cells in the preset direction and configured to separate the adjacent two of the battery cells, where a first cooling channel is formed between the separation member and at least one of the battery cells adjacent thereto, the separation member includes a first surface and a second surface disposed adjacent to each other, an inlet of the first cooling channel is located at the first surface, and an outlet of the first cooling channel is located at the second surface.

For the battery according to embodiments of this application, the separation member is disposed between two adjacent battery cells, so that the two battery cells can be separated from each other for electrical and thermal insulation, allowing for no mutual interference between the battery cells, thereby improving the safety of the battery. In addition, a medium flows through the first cooling channel to cool the battery cell, thereby reducing the risk of thermal runaway in the battery cell. The inlet of the first cooling channel is located at the first surface, the outlet is located at the second surface, the first surface and the second surface are disposed adjacent to each other, allowing for a short flowing distance of the medium, so that the medium can quickly discharge heat generated by the battery cell, reducing the risk of thermal runaway in the battery cell, thereby allowing for high safety of the battery.

According to some embodiments of this application, the first surface, the second surface, and a surface of the battery cell provided with an electrode terminal are located on different side surfaces of the battery.

In the battery, a wiring harness board is disposed on a side of the battery cell provided with the electrode terminal. In the above solution, the first surface, the second surface, and the surface at which the electrode terminal is located are different from each other, which can prevent the wiring harness board from affecting the flowing of the medium.

According to some embodiments of this application, the first surface and the surface of the battery cell provided with the electrode terminal are respectively provided on two opposite surfaces of the battery.

In the above solution, the surface at which the inlet of the first cooling channel is located and the surface at which the electrode terminal is located are disposed opposite each other, which can avoid interference to the first cooling channel caused by other structures such as the wiring harness board on the surface at which the electrode terminal is located, allowing for efficient discharge of the medium, thereby improving the cooling effect for the battery cell.

According to some embodiments of this application, the outlet of the first cooling channel is provided in two, and the two outlets are respectively located at two second surfaces adjacent to the first surface.

In the above solution, two outlets are provided, so that the heat dissipation efficiency of the medium can be improved, allowing for efficient discharge of heat generated by the battery cell, thereby allowing for high safety of the battery cell.

According to some embodiments of this application, the separation member has a third surface and a fourth surface, the third surface and the fourth surface are disposed opposite each other in the preset direction, at least one of the third surface and the fourth surface is provided with a groove, and the groove forms the first cooling channel.

In the above solution, the third surface and the fourth surface respectively correspond to surfaces of adjacent battery cells, such as a large surface of the battery cell (the large surface is a surface of the battery cell with the largest area). The at least one of the third surface and the fourth surface is provided with the groove to form the first cooling channel, thereby cooling the battery cell adjacent thereto.

According to some embodiments of this application, the outlet of the first cooling channel is provided in two, and the two outlets are respectively located at two second surfaces adjacent to the first surface. The groove includes a first groove and a second groove, where one end of the first groove is in communication with the inlet, and the other end is in communication with one of the two outlets; and one end of the second groove is in communication with the inlet, and the other end is in communication with the other of the two outlets.

In the above solution, two outlets are provided, so that the cooling effect for the battery cell can be improved, allowing for high safety of the battery cell. The first groove and the second groove are provided, so that the medium flows through the first groove and the second groove respectively, allowing the medium to be shunted and increasing a contact area with the battery cell, thereby improving the cooling effect for the battery cell.

According to some embodiments of this application, the separation member further includes a first fluid collecting part and a second fluid collecting part, where the first fluid collecting part and the second fluid collecting part are each provided with the outlet. The first groove is provided in plurality, and the plurality of first grooves are in communication with the first fluid collecting part; and/or the second groove is provided in plurality, and the plurality of second grooves are in communication with the second fluid collecting part.

When the groove is provided in plurality, if the medium is not collected and discharged together, there may be a risk of the medium flowing back into the first cooling channel and transferring heat to the battery again. Therefore, in the above solution, the first fluid collecting part and the second fluid collecting part are provided. The first fluid collecting part is configured to collect the medium flowing through the first groove, such that the collected medium is discharged together, preventing the medium with heat from flowing back and affecting the battery cell. The second fluid collecting part is configured to collect the medium flowing through the second groove, such that the collected medium is discharged together, preventing the medium with heat from flowing back and affecting the battery cell.

According to some embodiments of this application, the first fluid collecting part and/or the second fluid collecting part is provided with the outlet on at least one side in a first direction, the first direction intersects with an extension direction of a position where the first groove communicates with the first fluid collecting part, and/or the first direction intersects with an extension direction of a position where the second groove communicates with the second fluid collecting part.

In the above solution, the first direction intersects with the extension direction of the position where the first groove communicates with the first fluid collecting part, and the outlet faces the first direction. This can prevent the medium discharged from the outlet from flowing back into the first groove, thereby improving the cooling effect for the battery cell. In addition, this can prevent external pollutants from entering the first groove and affecting the battery cell. The first direction intersects with the extension direction of the position where the second groove communicates with the second fluid collecting part, and the outlet faces the first direction. This can prevent the medium discharged from the outlet from flowing back into the second groove, thereby improving the cooling effect for the battery cell. In addition, this can prevent external pollutants from entering the second groove and affecting the battery cell.

According to some embodiments of this application, the outlet is provided on a side of the first fluid collecting part and/or second fluid collecting part facing away from the first surface in the first direction.

In the above solution, the outlet faces away from the first surface, that is, the outlet faces away from the inlet, which can effectively prevent the medium with heat from entering the first cooling channel again through the inlet, improving the cooling effect for the battery cell, thereby allowing for high safety of the battery. When the outlet of the first cooling channel is located above the inlet, and the medium is a gas, the medium with heat can be discharged quickly, thereby improving the heat dissipation efficiency.

According to some embodiments of this application, the first fluid collecting part and/or the second fluid collecting part is provided with a through hole, and the through hole forms the outlet.

In the above solution, a method for forming the outlet is simple, and the outlet can be formed in the first fluid collecting part or the second fluid collecting part through processes such as punching, thereby reducing the manufacturing difficulties and costs of the battery.

According to some embodiments of this application, the separation member includes a partition plate and a frame, and the third surface and the fourth surface are two opposite surfaces of the partition plate in a thickness direction; and the frame surrounds the partition plate, and the frame and the partition plate form a cavity for accommodating the battery cell.

In the above solution, the frame can effectively constrain the battery cell such that the battery cell is stably accommodated in the cavity.

According to some embodiments of this application, only one of the third surface and the fourth surface is provided with the groove, and the other is a plane fitted to the battery cell.

The provision of the groove on the separation member will affect the structural strength of the separation member (the groove is cut on the separation member) or increase the thickness of the separation member (the separation member is provided with convex ribs, a recessed region between two adjacent convex ribs forms a groove, and the convex ribs will increase the thickness of the separation member), but the increase in the thickness of the separation member will lead to a decrease in energy density of the battery. Therefore, in the above solution, only one of the third surface and the fourth surface is provided with the groove, which can allow for high structural strength of the separation member while achieving the effect of cooling the battery cell or avoid the increase in the thickness of the separation member due to the provision of the convex ribs, thereby increasing volumetric capacity density of the battery.

According to some embodiments of this application, the third surface and/or the fourth surface is provided with an elastic part, and the elastic part protrudes from the third surface and/or the fourth surface to abut against the battery cell.

In the above solution, the elastic part provided absorbs the swelling deformation of the battery cell, avoiding misalignment of battery cells due to swelling to each other and abutment of two adjacent battery cells, thereby improving the structural stability of the battery.

According to some embodiments, the separation member further includes a fixing part, and the fixing part is disposed on the frame and configured to abut against and fix the battery cell.

In the above solution, the fixing part provided can effectively fix the battery cell in the cavity, thereby improving the structural stability of the battery.

According to some embodiments of this application, the separation member includes a limiting part, and the limiting parts of two adjacent separation members fit each other such that the two adjacent separation members are connected to each other.

In the above solution, the battery includes a plurality of separation members and a plurality of battery cells, and two adjacent separation members are connected to each other through fitting of the limiting parts, so that the battery cell between the two separation members can be fastened, thereby improving the structural stability of the battery.

According to some embodiments of this application, the battery further includes two end plates, where the two end plates are disposed at two ends of the battery cell in the preset direction and configured to limit the battery cell and the separation member, a second cooling channel is formed between at least one of the end plates and the battery cell, the at least one of the end plates includes a fifth surface and a sixth surface disposed adjacent to each other, an inlet of the second cooling channel is located at the fifth surface, and the inlet of the second cooling channel is located at the sixth surface.

In the above solution, the end plate is provided, so that the battery cell in the battery can be fastened, allowing for integrity of the battery. In addition, the second cooling channel can be provided to cool the battery cell, thereby allowing for high safety of the battery.

According to a second aspect, this application provides an electric device including the battery according to any one of the foregoing embodiments, where the battery is configured to supply electrical energy.

Additional aspects and advantages of this application will be given in part in the following description, part of which will become apparent from the following description or from the practice of this application.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is a schematic structural diagram of a battery according to some embodiments of this application;
FIG. 3 is a schematic structural diagram of a battery with a battery cell hidden according to some embodiments of this application;
FIG. 4 is an enlarged view of position AA in FIG. 2;
FIG. 5 is a schematic structural diagram of a separation member according to some embodiments of this application;
FIG. 6 is an enlarged view of position BB in FIG. 3;
FIG. 7 is a three-dimensional view of a separation member according to some embodiments of this application;
FIG. 8 is a schematic diagram of a battery cell and a separation member according to some embodiments of this application;
FIG. 9 is a schematic diagram of an end plate according to some embodiments of this application; and
FIG. 10 is a schematic diagram of another end plate according to some embodiments of this application.

Reference signs: 100. battery; 10. battery cell; 10a. first cooling channel; 20. separation member; 20a. partition plate; 20b. frame; 21. first surface; 22. second surface; 23. third surface; 24. fourth surface; 25. groove; 25a. first groove; 25b. second groove; 26. first fluid collecting part; 27. second fluid collecting part; 28. elastic part; 29. fixing part; 30. limiting part; 31. first limiting part; 32. second limiting part; 33. third limiting part; 34. fourth limiting part; 40. end plate; 41. second cooling channel; 42. fifth surface; 43. sixth surface; 1000. vehicle; 200. controller; and 300. motor.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, particular sequence or primary-secondary relationship of the technical features indicated. In the description of the embodiments of this application, "a plurality of" means at least two unless otherwise specifically stated.

In this specification, reference to "embodiment" means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It should be understood, explicitly or implicitly, by persons skilled in the art that some embodiments described herein may be combined with other embodiments.

In the description of the embodiments of this application, the term "and/or" is only an associative relationship for describing associated objects, indicating that three relationships may be present. For example, A and/or B may indicate the following three cases: presence of A, presence of both A and B, and presence of B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skills in the art can understand specific meanings of these terms in this application as appropriate to specific situations.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, cuboid, or of other shapes. This is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like.

The battery cell includes an electrode assembly and an electrolyte. The electrode assembly includes a positive electrode plate, a negative electrode plate, and a separator. The battery cell functions mainly relying on migration of metal ions between the positive electrode plate and the negative electrode plate. The positive electrode plate includes a positive electrode current collector and a positive electrode active substance layer. A surface of the positive electrode current collector is coated with the positive electrode active substance layer. A positive electrode current collector uncoated with the positive electrode active substance layer protrudes out of a positive electrode current collector coated with the positive electrode active substance layer, and the positive electrode current collector uncoated with the positive electrode active substance layer serves as a positive electrode tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. A surface of the negative electrode current collector is coated with the negative electrode active substance layer. A negative electrode current collector uncoated with the negative electrode active substance layer protrudes out of a negative electrode current collector coated with the negative electrode active substance layer, and the negative electrode current collector uncoated with the negative electrode active substance layer serves as a negative electrode tab. The negative electrode current collector may be made of copper, and the negative electrode active substance may be carbon, silicon, or the like. To allow a large current to pass through without any fusing, a plurality of positive electrode tabs are provided and stacked together, and a plurality of negative electrode tabs are provided and stacked together. The separator may be made of PP (polypropylene), PE (polyethylene), or the like.

Currently, from the perspective of market development, electric vehicles have become an important part of sustainable development of the automobile industry. A battery supplies energy for driving of a vehicle body and operation of various electric components in the vehicle body. A large quantity of battery cells are provided in the battery, and a plurality of battery cells are stacked along a preset direction. To avoid mutual influence of two adjacent battery cells, a separation member may be disposed between the two adjacent battery cells (between two adjacent surfaces of the two adjacent battery cells), so as to separate the two adjacent battery cells for electrical and thermal insulation. However, the inventors have found that the provision of the separation member between two adjacent battery cells will make adjacent surfaces of the battery cells unable to be cooled and thus lead to low safety of the battery and increased risk of thermal runaway. Thermal runaway is caused by the fact that a heat generation velocity of a battery cell is far higher than a heat dissipation velocity, and a large amount of heat is accumulated and cannot be dissipated in time. Thermal runaway will lead to combustion and explosion of a battery.

In view of this, to allow for high safety of a battery, the inventors have designed a battery through in-depth research. The battery includes: at least two battery cells arranged along a preset direction; and at least one separation member disposed between two adjacent battery cells in the preset direction and configured to separate the two adjacent battery cells, where a first cooling channel is formed between the separation member and at least one battery cell adjacent thereto, the separation member includes a first surface and a second surface disposed adjacent to each other, an inlet of the first cooling channel is located at the first surface, and an outlet of the first cooling channel is located at the second surface.

For the battery according to the embodiments of this application, the separation member is disposed between two adjacent battery cells, so that the two battery cells can be separated from each other for electrical and thermal insulation, allowing for no mutual interference between the battery cells, thereby improving the safety of the battery. In addition, a medium flows through the first cooling channel to cool the battery cell, thereby reducing the risk of thermal runaway in the battery cell. The inlet of the first cooling channel is located at the first surface, the outlet is located at the second surface, and the first surface and the second surface are disposed adjacent to each other, so that the medium can quickly discharge heat generated by the battery cell, thereby allowing for high safety of the battery.

The technical solution described in the embodiments of this application is applicable to batteries and electric devices using a battery.

The electric device may be a vehicle, a mobile phone, a portable device, a notebook computer, a ship, a spacecraft, an electric toy, an electric tool, or the like. The vehicle may be a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric device being a vehicle is used as an example for description of the following embodiments.

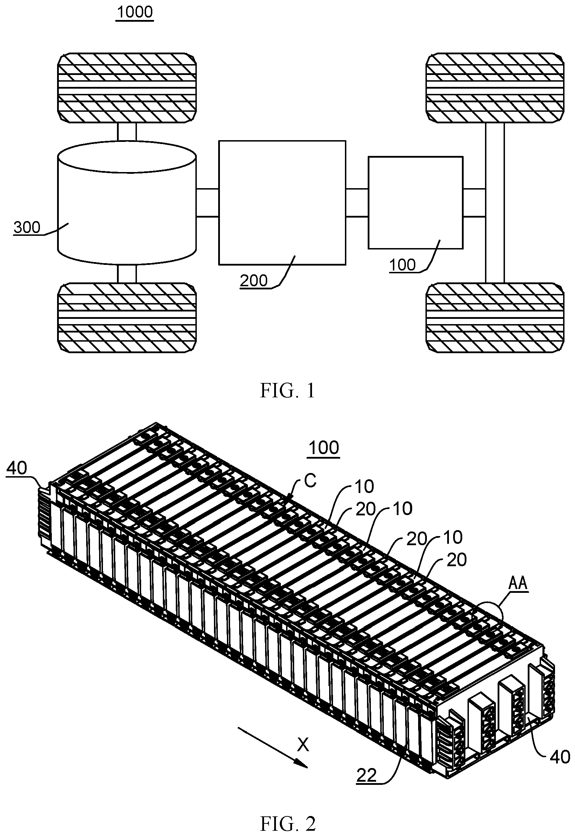

FIG. 1 is a schematic structural diagram of a vehicle according to some embodiments of this application.

A controller 200, a motor 300, and a battery 100 may be provided in the vehicle 1000, where the controller 200 is configured to control the battery 100 to supply power to the motor 300. For example, the battery 100 may be provided at the bottom, front, or rear of the vehicle 1000. The battery 100 may be configured to supply power to the vehicle. For example, the battery 100 may be used as an operational power source for the vehicle 1000 which is configured for a circuit system of the vehicle 1000, for example, to satisfy power needs of start, navigation, and running of the vehicle 1000. In another embodiment of this application, the battery 100 can be used as not only the operational power source for the vehicle 1000, but also as a driving power source for the vehicle 1000, replacing or partially replacing fossil fuel or natural gas to provide driving traction for the vehicle 1000.

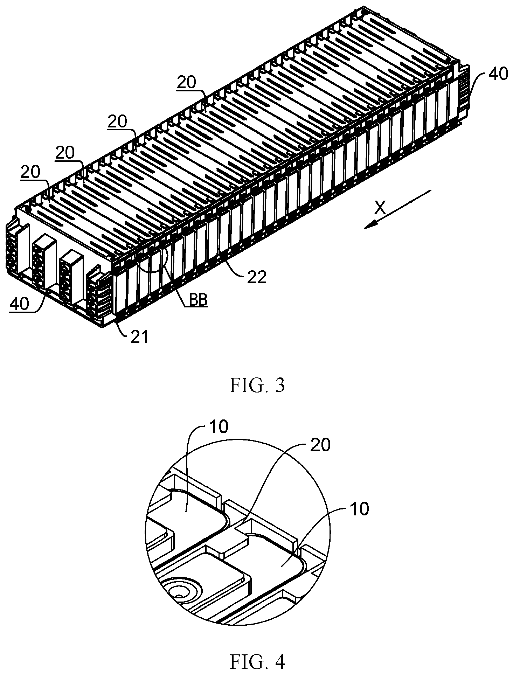

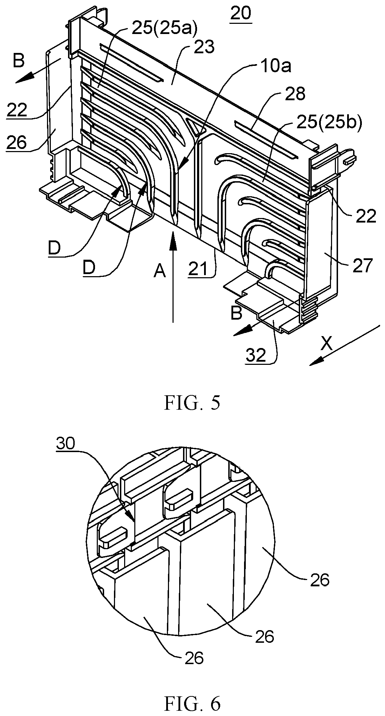

Refer to FIGs. 2 to 5. FIG. 2 is a schematic structural diagram of a battery 100 according to some embodiments of this application. FIG. 3 is a schematic structural diagram of a battery 100 with a battery cell 10 hidden according to some embodiments of this application. FIG. 4 is an enlarged view of position AA in FIG. 2. FIG. 5 is a schematic structural diagram of a separation member 20 according to some embodiments of this application. In FIGs. 2 and 3, a preset direction is indicated by an arrow with a reference sign X.

The battery 100 includes at least two battery cells 10 and at least one separation member 20. The at least two battery cells 10 are arranged along the preset direction X. The at least one separation member 20 is disposed between two adjacent battery cells 10 in the preset direction X and configured to separate the two adjacent battery cells 10. A first cooling channel 10a is formed between the separation member 20 and at least one battery cell 10 adjacent thereto. The separation member 20 includes a first surface 21 and a second surface 22 disposed adjacent to each other. An inlet of the first cooling channel 10a is located at the first surface 21, and an outlet of the first cooling channel 10a is located at the second surface 22.

In FIG. 5, a direction in which a medium enters the first cooling channel 10a, that is, the inlet of the first cooling channel 10a, is indicated by an arrow with a reference sign A. A direction in which the medium is discharged from the first cooling channel 10a, that is, the outlet of the first cooling channel 10a, is indicated by an arrow with a reference sign B.

The preset direction X refers to an arrangement direction of the battery cell 10, which may be a thickness direction or length direction of the battery cell 10 or may be another direction of the battery cell 10. The at least two battery cells 10 mean that the battery cells 10 in the battery 100 may be provided in plurality, such as two, three, four, or five. The at least one separation member 20 means that the separation member 20 in the battery 100 may be provided in at least one, such as one, two, three, or four. The quantity of the separation member 20 may be one less than the quantity of the battery cell 10. One separation member 20 is disposed between every two adjacent battery cells 10. Optionally, when the preset direction X is the thickness direction of the battery cell 10, a surface of the separation member 20 in the preset direction X corresponds to a large surface of a battery cell 10 adjacent thereto (the large surface refers to a surface of the battery cell 10 with the largest area). The first cooling channel 10a is a part formed between the separation member 20 and a surface of at least one battery cell 10 adjacent thereto and is used for flowing of the medium.

The medium refers to a substance capable of exchanging heat with the battery cell 10, which may be a liquid or a gas. When flowing through the first cooling channel 10a, the medium can exchange heat with the battery cell 10. For example, the medium takes away heat generated by the battery cell 10 itself to cool the battery cell 10, or transfers the heat to the battery cell 10 to heat the battery cell 10.

The inlet of the first cooling channel 10a refers to a position at which the medium flows into the first cooling channel 10a. The outlet of the first cooling channel 10a refers to a position at which the medium flows out of the first cooling channel 10a. The first surface 21 and the second surface 22 are two adjacent surfaces of the separation member 20. For example, when the first surface 21 is a bottom surface of the separation member 20, the second surface 22 is a side surface of the separation member 20 adjacent to the bottom surface. For another example, when the first surface 21 is a side surface, the second surface 22 may be a bottom surface or top surface of the separation member 20 adjacent to the side surface. For still another example, when the first surface 21 is a top surface, the second surface 22 is a side surface of the separation member 20 adjacent to the top surface.

For the battery 100 according to the embodiments of this application, the separation member 20 is disposed between two adjacent battery cells 10, so that the two battery cells 10 can be separated from each other for electrical and thermal insulation, allowing for no mutual interference between the battery cells 10, thereby improving the safety of the battery 100. In addition, the medium flows through the first cooling channel 10a to cool the battery cell 10, thereby reducing the risk of thermal runaway in the battery cell 10. The inlet of the first cooling channel 10a is located at the first surface 21, the outlet is located at the second surface 22, the first surface 21 and the second surface 22 are disposed adjacent to each other, allowing for a short flowing distance of the medium, so that the medium can quickly discharge heat generated by the battery cell 10, reducing the risk of thermal runaway in the battery cell, thereby allowing for high safety of the battery 100.

According to some embodiments of this application, referring to FIGs. 2 and 5, the first surface 21, the second surface 22, and a surface of the battery cell 10 provided with an electrode terminal are located on different side surfaces of the battery 100.

The electrode terminal is a component arranged on the battery cell 10 for outputting electrical energy of the battery cell 10 (such as a component indicated by a reference sign C in FIG. 2), which is used for electrical connection with an electrode assembly of the battery cell to implement charge and discharge of the battery cell 10. The battery 100 is provided with a wiring harness board (not shown in the figure). The wiring harness board is provided with a fluid collecting member, where the fluid collecting member connects electrode terminals of a plurality of battery cells 10 to implement a series connection, a parallel connection, or a series-parallel connection (a series connection and a series-parallel connection) of the plurality of battery cells 10 in the battery 100.

In the battery 100, the wiring harness board may be disposed on one side of the battery cell 10 provided with the electrode terminal. In the above solution, the first surface 21, the second surface 22, and the surface on which the electrode terminal is located are different from each other, which can prevent the wiring harness board from affecting the flowing of the medium (for example, the wiring harness board may block the discharge of the medium such that the heat of the battery cell 10 cannot be discharged in time, or the medium is blocked by the wiring harness board and flows back into the first cooling channel 10a).

According to some embodiments of this application, referring to FIGs. 2 and 5, the first surface 21 and the surface of the battery cell 10 provided with the electrode terminal are respectively provided on two opposite surfaces of the battery 100.

"The first surface 21 and the surface of the battery cell 10 provided with the electrode terminal are provided on two opposite surfaces of the battery 100" means that the first surface 21 and the electrode terminal are disposed opposite each other. For example, when the electrode terminal is located above the battery 100, the first surface 21 is located under the battery 100. The first surface 21 being located under the battery 100 means that the first surface 21 is the bottom surface of the separation member 20.

In the above solution, the surface at which the inlet of the first cooling channel 10a is located and the surface at which the electrode terminal is located are disposed opposite each other, which can avoid interference to the first cooling channel 10a caused by other structures such as the wiring harness board on the surface at which the electrode terminal is located, allowing the medium to effectively cool the battery cell 10. In addition, typically, the electrode terminal is located at an end of the battery cell 10 in a height direction, so that the inlet of the first cooling channel 10a is provided at a bottom end of the battery 100, the outlet of the first cooling channel 10a is provided on a side surface of the battery 100, the medium enters the battery 100 through the bottom, fully acting on a surface of the battery cell 10 (a surface between two adjacent battery cells 10), and is ultimately discharged from a side of the battery 100, so as to quickly cool the battery cell 10, thereby improving the safety of the battery cell 10.

According to some embodiments of this application, as shown in FIG. 5, the outlet of the first cooling channel 10a is provided in two, and the two outlets are respectively located at two second surfaces 22 adjacent to the first surface 21.

The outlet of the first cooling channel 10a is provided in two, that is, the medium is discharged from the two outlets. As compared with a solution in which the medium is discharged from one outlet, the discharging efficiency of the medium can be improved, that is, the heat dissipation efficiency can be improved, so that the cooling efficiency of the battery cell 10 can be improved.

In the above solution, two outlets are provided, so that the heat dissipation efficiency of the medium can be improved, efficiently taking away heat generated by the battery cell 10, thereby allowing for high safety of the battery cell 10.

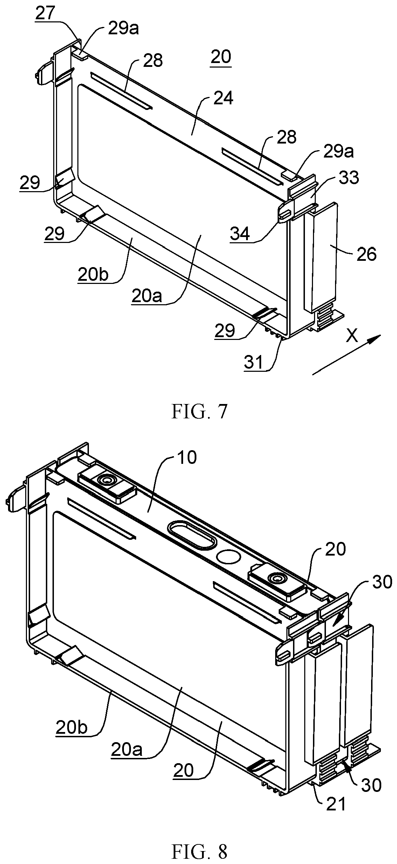

According to some embodiments of this application, referring to FIG. 5, the separation member 20 has a third surface 23 and a fourth surface 24 (as shown in FIG. 7), the third surface 23 and the fourth surface 24 are disposed opposite each other in the preset direction X, at least one of the third surface 23 and the fourth surface 24 is provided with a groove 25, and the groove 25 forms the first cooling channel 10a.

In the preset direction X, the separation member 20 is provided with the third surface 23 and the fourth surface 24 disposed opposite each other, and the third surface 23 and the fourth surface 24 respectively correspond to surfaces of battery cells 10 adjacent thereto. When the preset direction X is the thickness direction of the battery cell 10, the third surface 23 and the fourth surface 24 respectively correspond to large surfaces of the battery cells 10 adjacent thereto.

"At least one of the third surface 23 and the fourth surface 24 is provided with a groove 25, and the groove 25 forms the first cooling channel 10a" means that the first cooling channel 10a is formed between the third surface 23 and the battery cell 10 adjacent thereto through the groove 25, the first cooling channel 10a is formed between the fourth surface 24 and the battery cell 10 adjacent thereto through the groove 25, or the first cooling channels 10a are respectively formed between the third surface 23 and the battery cell 10 adjacent thereto and between the fourth surface 24 and the battery cell 10 adjacent thereto through the grooves 25. The groove 25 may be a structure provided on the third surface 23 or the fourth surface 24. The groove 25 may be formed by grooving or formed by a recessed region between adjacent two of convex ribs provided on the third surface 23 or the fourth surface 24.

In the above solution, the third surface 23 and the fourth surface 24 respectively correspond to surfaces of adj acent battery cells 10. The at least one of the third surface 23 and the fourth surface 24 is provided with the groove 25 to form the first cooling channel 10a, thereby cooling the battery cell 10 adjacent thereto.

According to some embodiments of this application, the outlet of the first cooling channel 10a is provided in two, and the two outlets are respectively located at two second surfaces 22 adjacent to the first surface 21. The groove 25 includes a first groove 25a and a second groove 25b, where one end of the first groove 25a is in communication with the inlet, and the other end is in communication with one of the two outlets; and one end of the second groove 25b is in communication with the inlet, and the other end is in communication with the other of the two outlets.

"One end of the first groove 25a is in communication with the inlet, and the other end is in communication with one of the two outlets; and one end of the second groove 25b is in communication with the inlet, and the other end is in communication with the other of the two outlets" means that the medium is shunted to the first groove 25a and the second groove 25b through a same inlet, and the shunted medium is separately discharged from different outlets.

The first groove 25a and the second groove 25b are two grooves 25 independent of each other. For clarity of description, the two outlets are defined as a first outlet and a second outlet respectively. Referring to FIG. 5, in the first groove 25a, the first groove 25a includes convex ribs (as shown in FIG. 5, the convex rib is indicated by a reference sign D), where the convex rib extends from the inlet to the first outlet, and a recessed region is formed between two adjacent convex ribs for flowing of the medium. In the second groove 25b, the second groove 25b includes convex ribs, where the convex rib extends from the inlet to the second outlet, and a recessed region is formed between two adjacent convex ribs for flowing of the medium. The first groove 25a and the second groove 25b separate the third surface 23 or fourth surface 24 of the separation member 20 into two regions. When the medium enters through the inlet, the medium can be shunted into the two regions to fully act on the battery cell 10.

In the above solution, two outlets are provided, so that the cooling efficiency of the battery cell 10 can be improved, allowing for high safety of the battery cell 10. The first groove 25a and the second groove 25b are provided, so that the medium flows through the first groove 25a and the second groove 25b respectively, allowing for an increased heat exchange area between the medium and the battery cell 10 and allowing the medium to fully act on the battery cell 10, thereby improving the cooling effect for the battery cell 10.

According to some embodiments of this application, referring to FIGs. 5 and 6, FIG. 6 is an enlarged view of position BB in FIG. 3. The separation member 20 further includes a first fluid collecting part 26 and a second fluid collecting part 27. The first fluid collecting part 26 and the second fluid collecting part 27 are each provided with the outlet. The first groove 25a is provided in plurality, and the plurality of first grooves 25a are in communication with the first fluid collecting part 26; and/or the second groove 25b is provided in plurality, and the plurality of second grooves 25b are in communication with the second fluid collecting part 27.

The first fluid collecting part 26 may be a fluid collecting plate connected to the second surface 22 or a fluid collecting plate located on the second surface 22. Alternatively, the first fluid collecting part 26 forms the second surface 22 and serves as a part in communication with the plurality of first grooves 25a to collect the medium in the plurality of first grooves 25a and discharge the collected medium together from the outlet. The second fluid collecting part 27 may be a fluid collecting plate connected to the second surface 22 or a fluid collecting plate located on the second surface 22. Alternatively, the second fluid collecting part 27 forms the second surface 22 and serves as a part in communication with the plurality of second grooves 25b to collect the medium in the plurality of second grooves 25b and discharge the collected medium together from the outlet.

When the groove 25 is provided in plurality, if the medium is not collected and discharged together, there may be a risk of the medium flowing back into the first cooling channel 10a and transferring heat to the battery 100 again. Therefore, in the above solution, the first fluid collecting part 26 and the second fluid collecting part 27 are provided. The first fluid collecting part 26 is configured to collect the medium flowing through the first groove 25a, such that the collected medium is discharged together, preventing the medium with heat from flowing back and affecting the battery cell 10. The second fluid collecting part 27 is configured to collect the medium flowing through the second groove 25b, such that the collected medium is discharged together, preventing the medium with heat from flowing back and affecting the battery cell 10.

According to some embodiments of this application, the first fluid collecting part 26 and/or the second fluid collecting part 27 is provided with the outlet on at least one side in a first direction, the first direction intersects with an extension direction of a position where the first groove 25a communicates with the first fluid collecting part 26, and/or the first direction intersects with an extension direction of a position where the second groove 25b communicates with the second fluid collecting part 27.

The first direction may intersect with the extension direction of the position where the first groove 25a communicates with the first fluid collecting part 26 or the first direction may intersect with the extension direction of the position where the second groove 25b communicates with the second fluid collecting part 27. In FIG. 5, the extension direction of the position where the first groove 25a communicates with the first fluid collecting part 26 and the extension direction of the position where the second groove 25b communicates with the second fluid collecting part 27 are the same direction. The direction is a width direction of the separation member 20, a direction intersecting with the direction is the first direction, and the first direction may be a thickness direction of the separation member 20 or a height direction of the separation member 20. "The outlet is provided on at least one side in a first direction" means that the outlet may be provided on a side of the first fluid collecting part 26 or second fluid collecting part 27 in the preset direction X or a side of the separation member 20 in the height direction.

In the above solution, the first direction intersects with the extension direction of the position where the first groove 25a communicates with the first fluid collecting part 26, and the outlet faces the first direction. This can prevent the medium discharged from the outlet from flowing back into the first groove 25a, thereby improving the cooling effect for the battery cell 10. In addition, this can prevent external pollutants from entering the first groove 25a and affecting the battery cell 10. The first direction intersects with the extension direction of the position where the second groove 25b communicates with the second fluid collecting part 27, and the outlet faces the first direction. This can prevent the medium discharged from the outlet from flowing back into the second groove 25b, thereby improving the cooling effect for the battery cell 10. In addition, this can prevent external pollutants from entering the second groove 25b and affecting the battery cell 10.

According to some embodiments of this application, the outlet is provided on a side of the first fluid collecting part 26 and/or second fluid collecting part 27 facing away from the first surface 21 in the first direction.

The outlet of the first cooling channel 10a being provided on a side facing away from the first surface 21 means that the outlet of the first cooling channel 10a faces away from the surface at which the inlet of the first cooling channel 10a is located.

In the above solution, the outlet of the first cooling channel 10a faces away from the first surface 21, that is, the outlet of the first cooling channel 10a faces away from the inlet of the first cooling channel 10a, which can effectively prevent the medium with heat from entering the first cooling channel 10a again through the inlet, allowing for effective cooling for the battery cell 10, thereby allowing for high safety of the battery 100. When the outlet of the first cooling channel 10a is located above the inlet, and the medium is a gas, the medium with heat can be discharged quickly, thereby improving the heat dissipation efficiency.

In some embodiments, the first fluid collecting part 26 is a part protruding from the second surface 22, where a gap is present between the first fluid collecting part 26 and the second surface 22, and the gap forms the outlet of the first cooling channel 10a.

Optionally, in some other embodiments, the first fluid collecting part 26 and/or the second fluid collecting part 27 is provided with a through hole, and the through hole forms the outlet.

In the above solution, a method for forming the outlet is simple, and the outlet can be formed in the first fluid collecting part 26 or the second fluid collecting part 27 through processes such as punching, thereby reducing the manufacturing difficulties and costs of the battery 100.

According to some embodiments of this application, referring to FIGs. 7 to 8, FIG. 7 is a three-dimensional view of a separation member 20 according to some embodiments of this application, and FIG. 8 is a schematic diagram of a battery cell 10 and a separation member 20 according to some embodiments of this application. The separation member 20 includes a partition plate 20a and a frame 20b. The third surface 23 and the fourth surface 24 are two opposite surfaces of the partition plate 20a in a thickness direction. The frame 20b surrounds the partition plate 20a, and the frame 20b and the partition plate 20a form a cavity for accommodating the battery cell 10.

The partition plate 20a is a part connected to the frame 20b, and two opposite surfaces of the partition plate 20a in the thickness direction are the third surface 23 and the fourth surface 24 respectively. The frame 20b is a part surrounding the partition plate 20a and is configured to form a cavity with the partition plate 20a, and the cavity is used to accommodate the battery cell 10. Referring to FIG. 8, in the battery 100, one battery cell 10 is disposed between two separation members 20, and the battery cell 10 is accommodated in a cavity of one separation member 20 adjacent thereto.

In the above solution, the frame 20b can effectively constrain the battery cell 10 such that the battery cell 10 is stably accommodated in the cavity.

According to some embodiments of this application, referring to FIGs. 5 and 7, only one of the third surface 23 and the fourth surface 24 is provided with the groove 25, and the other is a plane fitted to the battery cell 10.

"Only one of the third surface 23 and the fourth surface 24 is provided with the groove 25, and the other is a plane fitted to the battery cell 10" means that in the separation member 20, the fourth surface 24 is a plane when the third surface 23 is provided with the groove 25, or the third surface 23 is a plane when the fourth surface 24 is provided with the groove 25.

The groove 25 provided on the separation member 20 will affect the structural strength of the separation member 20 (the groove is cut on the separation member 20) or increase the thickness of the separation member 20 (the separation member 20 is provided with convex ribs to form the groove 25, and the convex ribs will increase the thickness of the separation member 20), but the increase in the thickness of the separation member 20 will lead to a decrease in energy density of the battery 100. Therefore, in the above solution, only one of the third surface 23 and the fourth surface 24 is provided with the groove 25, which can allow for high structural strength of the separation member 20 while achieving the effect of cooling the battery cell 10 or avoid the increased thickness of the separation member 20 due to the provision of the convex ribs, thereby increasing volumetric capacity density of the battery 100.

According to some embodiments of this application, the third surface 23 and/or the fourth surface 24 is provided with an elastic part 28, and the elastic part 28 protrudes from the third surface 23 and/or the fourth surface 24 to abut against the battery cell 10.

The elastic part 28 refers to an elastic part capable of absorbing swelling deformation of the battery cell 10, which may be an elastic structure such as an elastic sheet or a plastic sheet.

In the above solution, the elastic part 28 provided absorbs the swelling deformation of the battery cell 10, avoiding misalignment of battery cells 10 due to swelling to each other and abutment of two adjacent battery cells 10, thereby improving the structural stability of the battery 100.

According to some embodiments of this application, referring to FIG. 7, the separation member 20 further includes a fixing part 29, and the fixing part 29 is disposed on the frame 20b and configured to abut against and fix the battery cell 10.

The fixing part 29 is a part disposed on the frame 20b and protrudes from an inner wall of the frame 20b to abut against the battery cell 10, so that the battery cell 10 is stably accommodated in the cavity. The fixing part 29 may be elastic. For example, the fixing part 29 may be an elastic piece protruding from the frame 20b to elastically abut against the surface of the battery cell 10.

In the above solution, the fixing part 29 provided can effectively fix the battery cell 10 in the cavity, thereby improving the structural stability of the battery 100.

Optionally, the fixing part 29 is provided in plurality, and the plurality of fixing parts 29 correspond to a bottom surface and side surface of the battery cell 10, so that the battery cell 10 is evenly stressed. Optionally, a top surface of the frame 20b may be provided with an abutment block 29a, and the abutment block 29a abuts against a top surface of the battery cell 10, so that the battery cell 10 is fixed by the abutment block 29a and the plurality of fixing parts 29.

According to some embodiments of this application, the separation member 20 includes a limiting part 30, and the limiting parts 30 of two adjacent separation members 20 fit each other such that the two adjacent separation members 20 are connected to each other.

The limiting part 30 is a part for implementing interconnection of two adjacent separation members 20. Optionally, referring to FIGs. 5 and 7, the limiting part 30 includes a first limiting part 31 and a second limiting part 32. Each separation member 20 is provided with the first limiting part 31 and the second limiting part 32. The first limiting part 31 and the second limiting part 32 are disposed opposite each other in the preset direction X. In two adjacent separation members 20, the first limiting part 31 of one separation member 20 fits with the second limiting part 32 of the other separation member 20, for example, being mutually inserted, to implement interconnection of the two separation members 20. Optionally, the limiting part 30 may further include a third limiting part 33 and a fourth limiting part 34, and the third limiting part 33 and the fourth limiting part 34 are disposed opposite each other in the preset direction X. The first limiting part 31 and the second limiting part 32 may be disposed at a bottom end of the separation member 20, for example, the first limiting part 31 is an insertion slot provided at the bottom end of the separation member 20, and the second limiting part 32 is an insertion block provided on a bottom surface of the separation member 20. The third limiting part 33 and the fourth limiting part 34 may be disposed at positions of the separation member 20 close to a top end, for example, the third limiting part 33 is an insertion slot provided close to the top end of the separation member 20, and the fourth limiting part 34 is an insertion block provided close to the top end of the separation member 20. Two separation members 20 fit each other (for example, connect by insertion) through the first limiting part 31 and the second limiting part 32 and also through the third limiting part 33 and the fourth limiting part 34. In this way, the connection strength of the two separation members 20 can be improved, thereby improving the structural stability of the battery 100.

In the above solution, the battery 100 includes a plurality of separation members 20 and a plurality of battery cells 10, and two adjacent separation members 20 are connected to each other through fitting of the limiting parts 30, so that the battery cell 10 between the two separation members 20 can be fastened, thereby improving the structural stability of the battery 100.

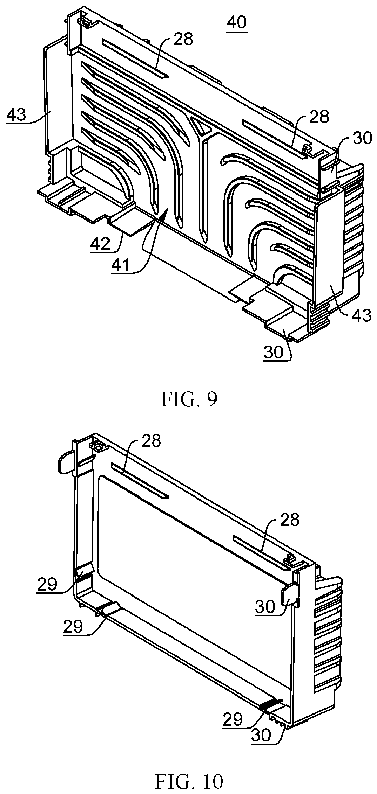

According to some embodiments of this application, referring to FIGs. 3 and 9, FIG. 9 is a schematic diagram of an end plate 40 according to some embodiments of this application.

The battery 100 further includes two end plates 40. The two end plates 40 are disposed at two ends of the battery cell 10 along the preset direction X and configured to limit the battery cell 10 and the separation member 20. A second cooling channel 41 is formed between at least one end plate 40 and the battery cell 10, and the at least one end plate 40 includes a fifth surface 42 and a sixth surface 43 disposed adjacent to each other. An inlet of the second cooling channel 41 is located at the fifth surface 42, and the inlet of the second cooling channel 41 is located at the sixth surface 43.

The end plate 40 is a part disposed at one end of each of a plurality of battery cells 10, and the end plate 40 is configured to limit the battery cell 10 and the separation member 20, so that a plurality of battery cells 10 and a plurality of separation members 20 constitute a whole. The second cooling channel 41 is a part formed between the end plate 40 and a surface of at least one battery cell 10 adjacent thereto and is used for flowing of the medium. The medium refers to a substance capable of exchanging heat with the battery cell 10, which may be a liquid or a gas. When flowing through the second cooling channel 41, the medium can exchange heat with the battery cell 10. For example, the medium takes away heat generated by the battery cell 10 itself to cool the battery cell 10, or transfers the heat to the battery cell 10 to heat the battery cell 10. The inlet of the second cooling channel 41 refers to a position at which the medium flows into the second cooling channel 41. The outlet of the second cooling channel 41 refers to a position at which the medium flows out of the second cooling channel 41.

The fifth surface 42 and the sixth surface 43 are two adjacent surfaces of the end plate 40. For example, when the fifth surface 42 is a bottom surface of the end plate 40, the sixth surface 43 is a side surface of the end plate 40, or when the fifth surface 42 is a side surface of the end plate 40, the sixth surface 43 is a top surface or bottom surface of the end plate 40.

In the above solution, the end plate 40 is provided, so that the battery cell 10 in the battery 100 can be fastened, allowing for integrity of the battery 100. In addition, the second cooling channel 41 can be provided to cool the battery cell 10, thereby allowing for high safety of the battery 100.

Optionally, in some embodiments, the inlet of the second cooling channel 41 and the inlet of the first cooling channel 10a are located on a same side, the outlet of the second cooling channel 41 and the outlet of the first cooling channel 10a are located on a same side, and the second cooling channel 41 likewise has two outlets. Optionally, in some embodiments, the second cooling channel 41 is formed by providing the groove 25 on the end plate 40. Optionally, in some embodiments, the end plate 40 may likewise be provided with a fluid collecting part to collect the medium in the second cooling channel 41 and discharge the medium together. Optionally, the end plate 40 may likewise be provided with the elastic part 28 to elastically abut against the battery cell 10. Optionally, the end plate 40 may likewise be provided with the limiting part 30, so that the end plate 40 is connected to a separation member 20 adj acent thereto. Optionally, in some embodiments, the second cooling channel 41 is formed between one end plate 40 in the two end plates 40 and the battery cell 10, and a surface of the other end plate 40 facing a battery cell 10 adjacent thereto is a plane. In some embodiments, as shown in FIG. 10, FIG. 10 is a schematic diagram of the other end plate 40 according to some embodiments of this application. A cavity may be formed on a side of the other end plate 40 facing the battery cell 10, and the cavity can accommodate the battery cell 10. In addition, the end plate 40 likewise has the fixing part 29 and abuts against the battery cell 10 accommodated in the cavity through the fixing part 29.

According to some embodiments of this application, an electric device is further provided and includes the battery 100 described in the foregoing embodiments, where the battery 100 is configured to supply electrical energy.

According to some embodiments of this application, refer to FIGs. 2 to 10. The battery 100 includes two end plates 40, a plurality of battery cells 10, and a plurality of separation members 20. The plurality of battery cells 10 are arranged along a preset direction X, and one separation member 20 is disposed between two adjacent battery cells 10. The two end plates 40 are respectively disposed at two ends of the plurality of battery cells 10 along the preset direction X. The separation member 20 has a third surface 23 and a fourth surface 24 opposite each other in the preset direction X. The third surface 23 is provided with a plurality of grooves 25. The plurality of grooves 25 form a first cooling channel 10a. The first cooling channel 10a is used for flowing of a medium so as to cool a battery cell 10 adjacent to the third surface 23. An inlet of the first cooling channel 10a is located at a first surface 21 of the separation member 20, that is, a bottom surface of the separation member 20. The first cooling channel 10a has two outlets. The two outlets are respectively located at two second surfaces 22 of the separation member 20, that is, two opposite side surfaces of the separation member 20 in a width direction. To be specific, the medium enters through the bottom of the separation member 20 and is discharged from a side of the separation member 20. In FIG. 5, a direction in which the medium enters the first cooling channel 10a is indicated by an arrow with a reference sign A, and a direction in which the medium is discharged from the first cooling channel 10a is indicated by an arrow with a reference sign B.

The groove 25 includes a first groove 25a and a second groove 25b, where one end of the first groove 25a is in communication with the inlet, and the other end of the first groove 25a is in communication with one outlet; and one end of the second groove 25b is in communication with the inlet, and the other end of the second groove 25b is in communication with the other outlet. To prevent the medium after heat exchange from flowing back and affecting the cooling effect for the battery cell 10, the separation member 20 further includes a first fluid collecting part 26 and a second fluid collecting part 27. The first fluid collecting part 26 is disposed on one side surface of the separation member 20 and is in communication with a plurality of first grooves 25a for collecting the medium discharged from the plurality of first grooves 25a. In addition, an outlet of the first fluid collecting part 26 faces the top and side of the battery 100, thereby reducing the risk of the medium flowing back. The second fluid collecting part 27 is disposed on the other side surface of the separation member 20 and is in communication with a plurality of second grooves 25b for collecting the medium discharged from the plurality of second grooves 25b. In addition, an outlet of the second fluid collecting part 27 faces the top and side of the battery 100, thereby reducing the risk of the medium flowing back. Each separation member 20 includes a partition plate 20a and a frame 20b, where the frame 20b surrounds the partition plate 20a to form a cavity capable of accommodating the battery cell 10. Each separation member 20 is provided with an elastic part 28, a fixing part 29, and a limiting part 30. The elastic part 28 is configured to elastically abut against the battery cell 10 so as to absorb swelling deformation of the battery 100. The fixing part 29 is configured to abut against the battery cell 10 so as to fix the battery cell 10 in the cavity. Two adjacent separation members 20 are connected via the limiting part 30, so that the plurality of battery cells 10 and the plurality of separation members 20 constitute a whole. To improve the cooling effect for the battery cell 10, a second cooling channel 41 is formed between one of the end plates 40 and the battery cell 10. An inlet of the second cooling channel 41 is located at a bottom surface of the end plate 40. The second cooling channel 41 has two outlets, and the two outlets are respectively located at two opposite side surfaces of the end plate 40. A surface of the other end plate 40 facing the battery cell 10 is a plane and is fitted to the battery cell 10. The end plate 40 likewise has the limiting part 30 to implement interconnection with a separation member 20 adjacent thereto.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery, comprising:
at least two battery cells arranged along a preset direction; and
at least one separation member disposed between adjacent two of the battery cells in the preset direction and configured to separate the adjacent two of the battery cells;
wherein a first cooling channel is formed between the separation member and at least one of the battery cells adjacent thereto, the separation member comprises a first surface and a second surface disposed adj acent to each other, an inlet of the first cooling channel is located at the first surface, and an outlet of the first cooling channel is located at the second surface.

2. The battery according to claim 1, wherein
the first surface, the second surface, and a surface of the battery cell provided with an electrode terminal are located on different side surfaces of the battery.

3. The battery according to claim 2, wherein
the first surface and the surface of the battery cell provided with the electrode terminal are respectively provided on two opposite surfaces of the battery.

4. The battery according to any one of claims 1 to 3, wherein
the outlet of the first cooling channel is provided in two, and the two outlets are respectively located at two second surfaces adjacent to the first surface.

5. The battery according to any one of claims 1 to 4, wherein
the separation member has a third surface and a fourth surface, the third surface and the fourth surface are disposed opposite each other in the preset direction, at least one of the third surface and the fourth surface is provided with a groove, and the groove forms the first cooling channel.

6. The battery according to claim 5, wherein
the outlet of the first cooling channel is provided in two, and the two outlets are respectively located at two second surfaces adjacent to the first surface; and
the groove comprises a first groove and a second groove, wherein one end of the first groove is in communication with the inlet, and the other end is in communication with one of the two outlets; and one end of the second groove is in communication with the inlet, and the other end is in communication with the other of the two outlets.

7. The battery according to claim 6, wherein
the separation member further comprises a first fluid collecting part and a second fluid collecting part, and the first fluid collecting part and the second fluid collecting part are each provided with the outlet; and
the first groove is provided in plurality, and the plurality of first grooves are in communication with the first fluid collecting part; and/or the second groove is provided in plurality, and the plurality of second grooves are in communication with the second fluid collecting part.

8. The battery according to claim 7, wherein
the first fluid collecting part and/or the second fluid collecting part is provided with the outlet on at least one side in a first direction, the first direction intersects with an extension direction of a position where the first groove communicates with the first fluid collecting part, and/or the first direction intersects with an extension direction of a position where the second groove communicates with the second fluid collecting part.

9. The battery according to claim 8, wherein
the outlet is provided on a side of the first fluid collecting part and/or second fluid collecting part facing away from the first surface in the first direction.

10. The battery according to any one of claims 7 to 9, wherein
the first fluid collecting part and/or the second fluid collecting part is provided with a through hole, and the through hole forms the outlet.

11. The battery according to any one of claims 5 to 10, wherein
the separation member comprises a partition plate and a frame, and the third surface and the fourth surface are two opposite surfaces of the partition plate in a thickness direction; and
the frame surrounds the partition plate, and the frame and the partition plate form a cavity for accommodating the battery cell.

12. The battery according to claim 11, wherein
only one of the third surface and the fourth surface is provided with the groove, and the other is a plane fitted to the battery cell.

13. The battery according to claim 11 or 12, wherein
the third surface and/or the fourth surface is provided with an elastic part, and the elastic part protrudes from the third surface and/or the fourth surface to abut against the battery cell.

14. The battery according to any one of claims 11 to 13, wherein
the separation member further comprises a fixing part, and the fixing part is disposed on the frame and configured to abut against and fix the battery cell.

15. The battery according to any one of claims 1 to 14, wherein
the separation member comprises a limiting part; and
the limiting parts of two adjacent separation members fit each other such that the two adjacent separation members are connected to each other.

16. The battery according to any one of claims 1 to 15, wherein the battery further comprises:
two end plates, wherein the two end plates are disposed at two ends of the battery cell in the preset direction and configured to limit the battery cell and the separation member, a second cooling channel is formed between at least one of the end plates and the battery cell, the at least one of the end plates comprises a fifth surface and a sixth surface disposed adjacent to each other, an inlet of the second cooling channel is located at the fifth surface, and the inlet of the second cooling channel is located at the sixth surface.

17. An electric device, comprising the battery according to any one of claims 1 to 16, wherein the battery is configured to supply electrical energy.
